Europäisches Patentamt

European Patent Office

Office européen des brevets

(11) Numéro de publication: **0 206 945**
**A2**

## (12) DEMANDE DE BREVET EUROPEEN

(21) Numéro de dépôt: 86401377.6

(22) Date de dépôt: 23.06.86

(51) Int. Cl.⁴: **G01N 35/06 , B01L 3/02**

(30) Priorité: 24.06.85 FR 8509552

(43) Date de publication de la demande:
30.12.86 Bulletin 86/52

(84) Etats contractants désignés:
CH DE FR GB IT LI NL SE

(71) Demandeur: BIONOVA S.á.r.l.
5, rue Huntziger
F-92110 Clichy(FR)

(72) Inventeur: Lamazière, Jacques
51, rue du Rocher
F-75008 Paris(FR)

(74) Mandataire: Dawidowicz, Armand
30, Boulevard du Château
F-92200 Neuilly(FR)

(54) Dispositif d'adaptation à diverses géométries de stations de pipetage à voies multiples.

(57) L'invention concerne les instruments de pipetage mettant en oeuvre simultanément plusieurs seringues parallèlles, ou tout autre moyen de prélever ou distribuer des liquides. Son but est de permettre à ces appareils de s'adapter successivement à plusieurs dimensions ou dispositions des récipients, ou à assurer le transfert de doses de liquides d'une disposition à une autre.

Elle comprend une ou plusieurs plaques de pussée latérale, agissant transversalement sur tout ou partie d'un ensemble d'aiguilles déformables reliées à des seringues ou autres organes de prélèvement-distribution de liquide, de façon à modifier la disposition des pointes des aiguilles.

Parmi ces applications, on peut citer le transfert simultané, à des fins d'analyses ou de conditionnement, d'échantillons de liquides contenus dans des tubes ou flacons vers des tubes plus petits ou des plaques alvéolées.

Fig 2

## Dispositif d'adaptation à diverses géométries de stations de pipetage à voies multiples.

La présente invention concerne les instruments de pipetage mettant en oeuvre simultanément plusieurs seringues parallèles, ou tout autre moyen de prélever ou distribuer des liquides. Son but est de permettre à ces appareils de s'adapter successivement à plusieurs dimensions ou dispositions des récipients, ou à assurer le transfert de doses de liquides d'une disposition à une autre. Dans des dispositifs connus, les organes d'aspiration ou distribution sont fixes les uns par rapport aux autres. Ils fonctionnent donc sur des récipients disposés en matrice, avec des entraxes fixes.

D'autres appareils comportent des organes de pipetage mobiles, individuellement ou par rangée, au prix d'accessoires mécaniques délicats et coûteux. Ces appareils sont destinés à transférer simultanément un ensemble de doses de liquides, d'une disposition géométrique vers une autre. Par exemple, après prélèvemnt simultané dans des flacons d'un diamètre de quelques centimètres disposés de façon jointive, on procède à une redistribution dans des tubes à essais de 13 mm de diamètre, eux aussi jointifs.

En analyse médicale ou agroalimentaire, le besoin est fréquent de transférer simultanément des doses à partir de tubes de prélèvement vers des plaques alvéolées (dites par exemple, de "microtitration").

L'objet de la présente invention est un dispositif permettant ce transfert simultané, en maintenant les injecteurs fixes et en faisant fléchir ou en déformant les aiguilles de ceux-ci au moyen d'une ou plusieurs plaques perforées assurant à la fois le mouvement et le guidage des aiguilles. Dans l'état final, les aiguilles ne sont pas parallèles, mais l'écoulement des liquides se fait à la verticale des pointes, face auxquelles on disposera récipients ou alvéoles.

Dans une première variante, un ensemble d'aiguilles demeure fixe tandis qu'un autre ensemble, imbriqué dans le premier en alternance, est actionné latéralement: les pointes des aiguilles disposées en rangées adjacentes sont ainsi rassemblées en un rang unique.

Dans une deuxième variante, l'ensemble des aiguilles est actionné transversalement, avec des amplitudes variables, de façon à ce que la disposition finale des pointes des aiguilles soit une réduction, selon un axe seulement, de la disposition initiale.

Dans une autre variante, les aiguilles sont mues par deux plaques perforées dont les mouvements sont perpendiculaires ou sécants: la disposition finale des pointes des aiguilles est alors une réduction géométrique suivant deux axes, de la

disposition initiale. La translation de la plaque (ou des plaques), qui déplace à son tour les aiguilles peut être obtenue de diverses façons: vérins hydrauliques ou pneumatiques, leviers à action manuelle, ensembles vis-écrou actionnés par un moteur électrique.

L'invention sera bien comprise à la lecture de la description suivante faite en se référant au dessin annexé dont les trois figures représentent schématiquement trois variantes du dispositif selon l'invention.

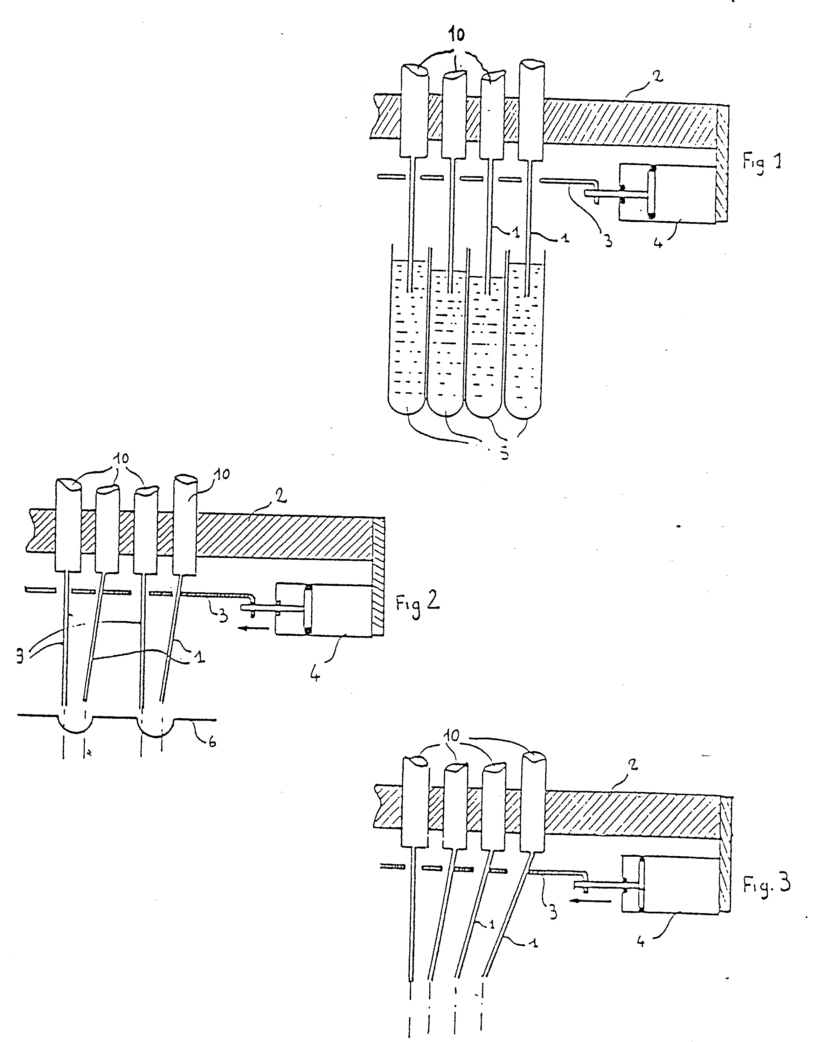

La figure 1 est une vue au repos des injecteurs (10) équipés d'aiguilles (1), insérés dans un bloc de maintien (2), sans contact avec une plaque de poussée latérale (3), actionnée dans l'exemple décrit par un vérin (4). Dans cet exemple, les aiguilles plongent dans récipients cylindriques (5).

Dans la figure 2, la plaque (3) agit latéralement sur une partie seulement des aiguilles (1), sans agir sur certaines aiguilles (9) de façon à ce que les doses distribuées par deux injecteurs adjacents soient proches ou même confondues, ou que les doses distribuées par deux rangées adjacentes d'aiguilles aboutissent à une rangée unique de récipients. Dans cet exemple, la distribution de liquides se fait sur une plaque alvéolée (6).

Dans la réalisation de la figure 3, l'ensemble des aiguilles a été déplacé au moyen de la plaque (3).

Le dispositif objet de l'invention peut être utilisé dans les cas où les contenus d'une pluralité de récipients doivent être transférés rapidement et simultanément vers des récipients plus petits, en particulier à des fins d'analyse ou de microconditionnement dans le domaine médical vétérinaire, pharmaceutique.

## Revendications

1. -Dispositif d'adaptation à diverses géométries de stations de pipetage à voies multiples comprenant un ensemble d'aiguilles solidaires chacune d'un injecteur de liquides et disposées en matrice, caractérisé par le fait qu'il comprend une plaque perforée (3) dont les perforations sont traversees chacune par une desdites aiguilles et ladite plaque (3) étant sensiblement orthogonale auxdites aiguilles (1) et mobile sensiblement dans son plan.

2. -Dispositif selon la revendication 1. caractérisé par le fait que les perforations de la plaque (3) sont identiques et leur distribution dans la plaque (3) est sensiblement identique à la distribution matricielle des aiguilles.

3. -Dispositif selon la revendication 1, caractérisé par le fait qu'il comporte deux plaques mobiles (3) dont les mouvements orthogonaux ou sécants déplacent selon ces deux axes les aiguilles (1) en assurant une réduction géométrique, suivant deux axes, de leur disposition initiale.

4. -Dispositif selon la revendication 1, caractérisé par le fait que la plaque (3) comporte une série de perforations laissant certaines aiguilles (9) fixes.

5. -Dispositif selon l'une des revendications 1 à 4, caractérisé par le fait que les aiguilles d'injections (1) et les organes de déplacement (3) ne sont pas en contact au repos.

6. -Dispositif selon l'une des revendications 1 à 5, caractérisé par le fait que le mouvement inverse des aiguilles (1) après la flexion est obtenu par l'élasticité propre des aiguilles.

7. -Dispositif selon l'une des revendications 1 à 5, caractérisé par le fait que les mouvements de retour des aiguilles (1) sont obtenus par le déplacement de la plaque (3).

Fig 1

Fig 2

Fig. 3